# EUROPÄISCHE PATENTANMELDUNG

(11) **EP 2 165 811 A2**
(43) Veröffentlichungstag der Anmeldung: **24.03.2010**
(21) Anmeldenummer: 09011570.0
(22) Anmeldetag: 10.09.2009
(51) Int. Cl.: B27C 9/04, B27M 1/08

(54) **Maschine und Verfahren zur Bearbeitung von Werkstücken aus Holz, Kunststoff und dergleichen**

(30) Priorität: 17.09.2008 DE 102008048553
(71) Anmelder: Michael Weinig Aktiengesellschaft, 97941 Tauberbischofsheim (DE)
(72) Erfinder: Gurka, Paul, 69429 Waldbrunn (DE)
(74) Vertreter: Jackisch-Kohl, Anna-Katharina

(57) **Zusammenfassung**

Die Maschine hat eine erste Transportbahn (4), längs der erste, längliche oder stabförmige Werkstücke (6) transportierbar sind. Sie werden mit einer Bearbeitungseinheit (51, 51') vorzugsweise komplett bearbeitet. Um das Verfahren so auszubilden, dass die Bearbeitung unterschiedlicher Werkstücke (6) in einfacher und kostensparender Weise möglich ist, weist die Maschine eine zweite Transportbahn (4) auf, längs der eine Spanneinheit (50) verfahrbar ist, mit der zwei Werkstücke (6) spannbar sind. Sie werden auf der zweiten Transportbahn (4) bearbeitet. Beide Transportbahnen (8; 4) sind von einer quer zu ihnen sich erstreckenden Führung überspannt, längs der die Bearbeitungseinheit (51, 51') zur wahlweisen Bearbeitung der ersten und der zweiten Werkstücke (6) verfahrbar ist. Dadurch sind für die unterschiedlich gestalteten Werkstücke (6) keine Sondermaschinen oder aufwändige Spannvorrichtungen notwendig. Die unterschiedlichen Werkstücke (6) können in einer einzigen Maschine bearbeitet werden, wobei die Werkstücke (6) auf ihrer jeweiligen Transportbahn (4) vorzugsweise komplett bearbeitet werden, bevor sie die Maschine verlassen.

## Beschreibung

Die Erfindung betrifft eine Maschine zum Bearbeiten von Werkstücken aus Holz, Kunststoff und dergleichen nach dem Oberbegriff des Anspruches 1 sowie ein Verfahren zur Bearbeitung von Werkstücken aus Holz, Kunststoff und dergleichen nach dem Oberbegriff des Anspruches 11.

Es sind Maschinen bekannt, bei denen längliche Werkstücke im Durchlaufverfahren bearbeitet werden. Diese Werkstücke werden mittels einer Vorschubeinheit, die durch auf den Werkstücken aufliegende Walzen oder auch durch Klemmtische gebildet sein kann, längs einer Transportbahn bewegt. Beim Durchlauf der Werkstücke durch die Maschine werden mit entsprechenden Werkzeugen Bearbeitungen am Werkstück vorgenommen, z. B. Längsbearbeitungen, stirnseitige Bearbeitungen, Bohrungen und dergleichen. Müssen beispielsweise gebogene oder plattenförmige Werkstücke bearbeitet werden, sind hierfür gesonderte Maschinen oder aufwändige Vorrichtungen notwendig, weil für solche Werkstücke größere Spannbreiten bzw. ein Flächentisch notwendig sind.

Der Erfindung liegt die Aufgabe zugrunde, die gattungsgemäße Maschine und das gattungsgemäße Verfahren so auszubilden, dass die Bearbeitung unterschiedlicher Werkstücke in einfacher und kostensparender Weise möglich ist.

Diese Aufgabe wird bei der gattungsgemäßen Maschine erfindungsgemäß mit den kennzeichnenden Merkmalen des Anspruches 1 und beim gattungsgemäßen Verfahren erfindungsgemäß mit den kennzeichnenden Merkmalen des Anspruches 11 gelöst.

Bei der erfindungsgemäßen Maschine können die ersten Werkstücke längs der ersten Transportbahn transportiert und mit der Bearbeitungseinheit im erforderlichen Maße vorzugsweise komplett bearbeitet werden. Längs der zweiten Transportbahn können die zweiten Werkstücke verfahren und ebenfalls bearbeitet, vorteilhaft komplett bearbeitet werden. Da die Führung für die Bearbeitungseinheit die beiden Transportbahnen überspannt, können mit der Bearbeitungseinheit die ersten und die zweiten Werkstücke jeweils bearbeitet werden. Damit ist es möglich, auf der ersten Transportbahn beispielsweise längliche Werkstücke zu bearbeiten, während auf der Spanneinheit beispielsweise bogenförmige, plattenförmige oder rahmenförmige Werkstücke gespannt und längs der zweiten Transportbahn verfahren werden können, um diese Werkstücke mit der Bearbeitungseinheit zu bearbeiten. Dadurch sind für die unterschiedlich gestalteten Werkstücke keine Sondermaschinen oder aufwändige Spannvorrichtungen notwendig. Vielmehr können die unterschiedlich gestalteten Werkstücke in einer einzigen Maschine bearbeitet werden. Dabei werden die Werkstücke nicht nacheinander längs beider Transportbahnen transportiert, sondern auf ihrer jeweiligen Transportbahn vorzugsweise komplett bearbeitet, bevor sie aus der Maschine herausgeführt werden.

Vorteilhaft ist die Bearbeitungseinheit an einem Schlitten gelagert, der längs der Führung verfahren werden kann. Dadurch lässt sich die Bearbeitungseinheit einfach und innerhalb kurzer Zeit zwischen den unterschiedlichen Bearbeitungsorten verfahren.

Die Bearbeitungseinheit ist vorteilhaft quer zur Führung und zu den Transportbahnen längs des Schlittens verfahrbar. Damit kann die Bearbeitungseinheit in zwei zueinander senkrechten Richtungen verfahren werden. Das zu bearbeitende Werkstück wird dann in der dritten Richtung zur Bearbeitung verstellt. Auf diese Weise kann das Werkstück an jeder gewünschten Stelle bearbeitet werden.

Eine besonders vorteilhafte Ausbildung ergibt sich, wenn längs der Führung zwei Schlitten unabhängig voneinander verfahrbar sind, die jeweils eine Bearbeitungseinheit tragen. Dadurch besteht die Möglichkeit, mit zwei Bearbeitungseinheiten am gleichen Werkstück oder am ersten und am zweiten Werkstück zeitgleich zu arbeiten. Dies hat den Vorteil, dass diejenige Bearbeitungseinheit, die zur Bearbeitung des ersten Werkstückes nicht benötigt wird, in dieser Zeit das zweite Werkstück bearbeiten kann.

Die Spanneinheit auf der zweiten Transportbahn weist vorteilhaft unabhängig voneinander verstellbare Spanntraversen auf, die mit jeweils wenigstens einem Spannelement versehen sind. Durch Verstellen der Spanntraversen kann die Spanneinheit einfach an unterschiedlich große Werkstücke angepasst werden.

Das Spannelement ist vorteilhaft längs der Spanntraverse verstellbar, so dass nicht nur gerade verlaufende Werkstücke, sondern auch beispielsweise gekrümmte Werkstücke eingespannt werden können. Das Spannelement jeder Spanntraverse kann hierbei problemlos in die gewünschte Spannstellung verstellt werden.

Die beiden Transportbahnen können auf unterschiedlicher Höhe liegen.
Dies hat den Vorteil, dass beispielsweise auf der tiefer liegenden Transportbahn ein Werkstück von einer Bedienungsperson problemlos aufgespannt werden kann.

Der Bearbeitungseinheit ist wenigstens ein Werkzeugmagazin in vorteilhafter Weise zugeordnet, so dass das für die Bearbeitung der Werkstücke jeweils notwendige Werkzeug einfach eingewechselt werden kann.

Besonders vorteilhaft ist es, wenn bei zwei Bearbeitungseinheiten jeder Bearbeitungseinheit jeweils wenigstens ein Werkzeugmagazin zugeordnet ist. Dadurch können beide Bearbeitungseinheiten unabhängig voneinander und damit beispielsweise zeitgleich die jeweils benötigten Werkzeuge aufnehmen.

Bei einer vorteilhaften Ausgestaltung ist längs der ersten Transportbahn wenigstens ein Klemmtisch verfahrbar, der das erste Werkstück aufnimmt. Mit dem Klemmtisch lässt sich das erste Werkstück einwandfrei einspannen und längs der ersten Transportbahn verfahren.

Das erfindungsgemäße Verfahren zeichnet sich dadurch aus, dass das erste und das zweite Werkstück entweder zeitgleich oder zeitlich nacheinander mit einer oder mit jeweils einer Bearbeitungseinheit bearbeitet, vorteilhaft komplett bearbeitet werden können. Dadurch ist es möglich, unterschiedlich gestaltete Werkstücke innerhalb kürzester Zeit im erforderlichen Maße mit hoher Qualität zu bearbeiten.

Die beiden Bearbeitungseinheiten werden vorteilhaft unabhängig voneinander zur Bearbeitung der ersten und zweiten Werkstücke verfahren, d.h. die Bearbeitungseinheiten werden längs der die Transportbahnen überspannenden Führung sowie längs der zugehörigen Schlitten verfahren.

Bei einer vorteilhaften Vorgehensweise wird das zweite Werkstück aufgespannt, während das erste Werkstück noch bearbeitet wird. Auf diese Weise ist eine rüstzeitneutrale Fertigung möglich.

Weitere Merkmale der Erfindung ergeben sich aus den weiteren Ansprüchen, der Beschreibung und den Zeichnungen.

Die Erfindung wird anhand dreier in den Zeichnungen dargestellter Ausführungsformen näher erläutert. Es zeigen
- Fig. 1: in perspektivischer Darstellung eine erste Ausführungsform einer erfindungsgemäßen Maschine,
- Fig. 2: in einer Darstellung entsprechend Fig. 1 eine zweite Ausführungsform einer erfindungsgemäßen Maschine,
- Fig. 3: in einer Darstellung entsprechend Fig. 1 eine dritte Ausführungsform einer erfindungsgemäßen Maschine als Teil einer Anlage,
- Fig. 4: die Maschine gemäß Fig. 2, auf der ein rahmenförmiges Werkstück bearbeitet wird.

Die in den Zeichnungen dargestellten Maschinen dienen zum Bearbeiten von Werkstücken aus Holz, Kunststoff und dergleichen. Insbesondere dienen die Maschinen zum Bearbeiten von Holzwerkstücken, aus denen Teile im Fenster- und Türbau sowie im Möbelbau hergestellt werden.

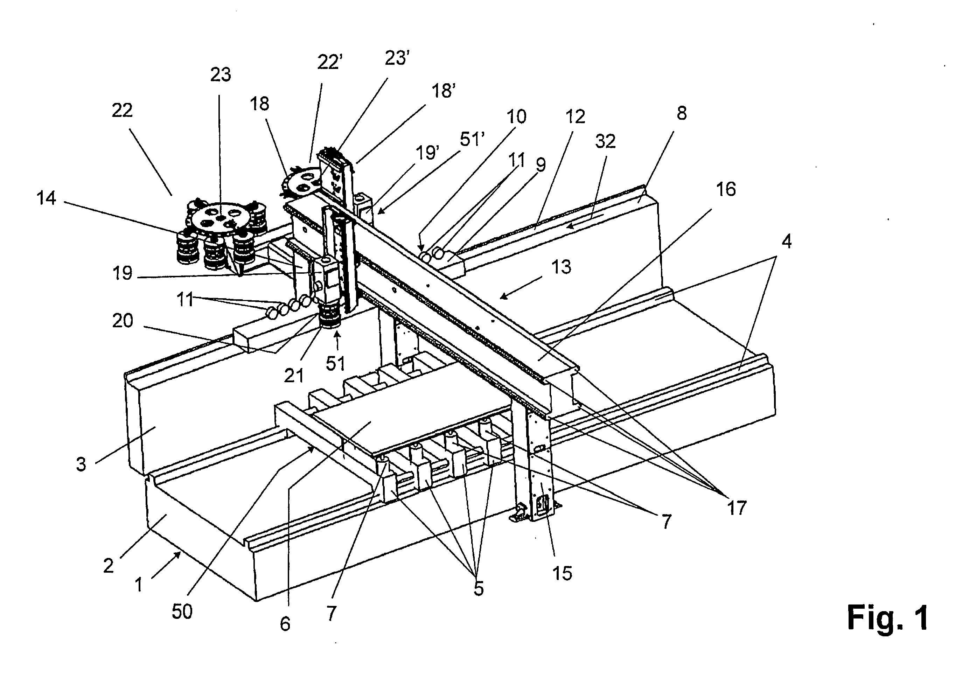

Die Maschine gemäß Fig. 1 hat ein Maschinenbett 1 mit einem horizontalen Bettteil 2 und einem vertikalen Bettteil 3, der längs der einen Längsseite des horizontalen Bettteiles 2 angeordnet ist. Auf dem horizontalen Bettteil 3 befindet sich eine X-Führung 4, die aus zwei zueinander parallelen Führungsleisten besteht, auf denen eine Spanneinheit 50 mit Spanntraversen 5 in X-Richtung verfahrbar sind. Die Spanntraversen 5 sind gleich ausgebildet und unabhängig voneinander in X-Führung verstellbar. Auf den Spanntraversen 5 ist im Ausführungsbeispiel eine Holzplatte 6 als Werkstück befestigt. Die Spanntraversen 5 sind an sich bekannt und werden darum auch nicht näher beschrieben. Jede Spanntraverse 5 ist mit Spannelementen 7 versehen, die längs der Spanntraversen 5 verstellbar sind, so dass sie an unterschiedlich zu bearbeitende Werkstücke 6 angepasst werden können. Jede Spanntraverse 5 hat wenigstens zwei solcher Spannelemente 7, die bei der Ausführungsform gemäß Fig. 1 als Saugspanner ausgebildet sind. Mit ihnen wird das flächige Werkstück 6 angesaugt und zuverlässig gehalten.

Auf der Stirnseite 8 des vertikalen Bettteiles 7 werden längliche bzw. stabförmige Werkstücke 9, vorzugsweise Holzwerkstücke, mittels wenigstens einer Vorschubeinrichtung 10 in X-Richtung transportiert. Die Vorschubeinrichtung 10 wird beispielsweise durch drehbar angetriebene Vorschubwalzen 11 gebildet, die auf den Werkstücken 9 aufliegen und diese in X-Richtung in Vorschubrichtung 32 transportieren. Zur Ausrichtung der Werkstücke 9 während ihres Transportes ist der Bettteil 3 mit einem in X-Richtung sich erstreckenden Anschlaglineal 12 versehen, an dem das Werkstück 9 mit seiner in Vorschubrichtung 32 rechten Längsseite anliegt.

Das Maschinenbett 1 wird von einem Portal 13 überspannt, das sich senkrecht zur Transportrichtung X erstreckt und beiderseits des Maschinenbettes 1 mit vertikalen Stützen 14, 15 auf dem Untergrund abgestützt ist. Auf den Stützen 14, 15 ist ein Querträger 16 aufgelagert, der zumindest an einer Längsseite eine Y-Führung 17 aufweist. Vorteilhaft ist der Träger 16 auf beiden Längsseiten mit jeweils einer Y-Führung 17 versehen. Längs der Y-Führung 17 ist jeweils ein Schlitten 18, 18' in Y-Richtung verfahrbar. Längs jedes Schlittens 18, 18' ist in Z-Richtung eine Bearbeitungseinheit 51 verfahrbar, die eine durch einen Motor 19 antreibbare Spindel 20 aufweist. Im Ausführungsbeispiel sitzt in der Spindel 20 des Schlittens 18 ein Werkzeug 21, mit dem die in Vorschubrichtung 32 linke Längsseite des Werkstückes 9 bei dessen Durchlauf bearbeitet wird. Der Schlitten 18' trägt ebenfalls die Bearbeitungseinheit 51' mit dem Motor 19' mit der Spindel und dem entsprechenden Werkzeug. Die Bearbeitungseinheit 51, 51' kann längs des Schlittens 18, 18' senkrecht zur X- und Y-Richtung in Z-Richtung verfahren werden.

Die Antriebe zum Verstellen der Schlitten 18, 18' in Y- und in Z-Richtung, der Vorschubwalzen 11 und der Spanneinheit 50 sind nicht dargestellt.

Aufgrund der beschriebenen Ausbildung können die Werkzeuge 21 in den zwei Richtungen Y, Z und die Werkstücke 6, 9 in X-Richtung stufenlos verstellt werden. Es ist dadurch möglich, die Werkstücke 6, 9 im gewünschten Maße zu bearbeiten. Um die Bewegungen in den drei Richtungen aufeinander abzustimmen, ist eine entsprechende Steuerung vorgesehen, mittels der die Antriebe für die Spanneinheit 50, die Vorschubwalzen 11, die Schlitten 18, 18' und die Bearbeitungseinheiten 51, 51' gesteuert werden.

Den beiden Schlitten 18, 18' bzw. den zugehörigen Spindeln 20 ist jeweils ein Werkzeugmagazin 22, 22' zugeordnet. Die Werkzeugmagazine 22, 22' können am Maschinenbett 1 oder auch am Träger 13 gehalten sein. Die Werkzeugmagazine 22, 22' sind so ausgebildet, dass die Bearbeitungseinheiten 51, 51' die Werkzeuge im Pickup-Verfahren aufnehmen können. Hierzu werden die Bearbeitungseinheiten zunächst längs der Schlitten 18, 18' nach oben gefahren. Die Schlitten 18, 18' werden dann in Y-Richtung zu den entsprechenden Werkzeugmagazinen 22, 22' bewegt. Sie sind um eine vertikale Achse 23, 23' drehbar, so dass sie in die gewünschte Position für den Werkzeugwechsel gedreht werden können. Die Werkzeugmagazine werden für den Werkzeugwechsel zunächst so gedreht, dass das in der Spindel 20 sitzende Werkzeug in einen freien Speicherplatz des Magazins 22, 22' eingesetzt werden kann. Anschließend wird das Werkzeugmagazin 22, 22' so gedreht, dass die Spindel 20 das entsprechende neue Werkzeug aufnehmen kann. Auf diese Weise ist ein rascher Werkzeugwechsel möglich, wobei der Werkzeugwechsel an beiden Bearbeitungseinheiten unabhängig voneinander vorgenommen werden kann, da jeder Bearbeitungseinheit ein Werkzeugmagazin zugeordnet ist.

Grundsätzlich ist es möglich, für die beiden Bearbeitungseinheiten ein gemeinsames Werkzeugmagazin vorzusehen. In diesem Falle wird vorteilhaft ein endlos umlaufendes Magazin eingesetzt, das parallel zur X-Richtung neben dem Maschinenbett 1 angeordnet ist.

Es ist ferner möglich, die Werkzeuge auch mittels einer Greifeinrichtung ein- und auszuwechseln.

Da die Werkzeugmagazine 22, 22' neben dem Maschinenbett 1 angeordnet sind, können die Werkzeugmagazine 22, 22' während des Bearbeitens der Werkstücke 6, 9 in der Maschine mit neuen Werkzeugen bestückt werden.

Solange das Werkstück 9 im Durchlaufverfahren bearbeitet wird, kann auf dem horizontalen Bettteil 2 das flächenförmige Werkstück 6 gespannt werden. Die Spanntraversen 5 sowie die Spannelemente 7 können hierbei an die Größe dieses Werkstückes 6 angepasst werden. Das plattenförmige Werkstück 6 kann mit der Spanneinheit 50 stufenlos in X-Richtung verfahren werden. Die Bearbeitungseinheit 51, 51'mit dem zur Bearbeitung des Werkstückes 6 notwendigen Werkzeug kann mittels der Schlitten 18, 18' gleichzeitig in Y-Richtung und längs der Schlitten 18, 18' in Z-Richtung verfahren werden. Die Schlitten 18, 18' sind so lang, dass mit dem Werkzeug 21 das Werkstück 6 bearbeitet werden kann. Da längs des Trägers 16 zwei Schlitten 18, 18' mit zwei Bearbeitungseinheiten unabhängig voneinander verstellbar sind, kann das Werkstück 6 gleichzeitig mit zwei Werkzeugen bearbeitet werden.

Durch die beiden unabhängig voneinander verfahrbaren Bearbeitungseinheiten 51, 51' ist eine sehr flexible und vielseitige Bearbeitung der Werkstücke 6, 9 möglich. So kann beispielsweise nur mit der einen Bearbeitungseinheit das Werkstück 6 bearbeitet werden, während die andere Bearbeitungseinheit zum zugehörigen Werkzeugmagazin verfahren und dort ein entsprechendes Werkzeug in die Bearbeitungseinheit eingesetzt wird, mit dem anschließend das längliche Werkstück 9 im Durchlaufverfahren bearbeitet werden kann. Während dessen Bearbeitung kann dann der andere Schlitten nach Beendigung der Bearbeitung des Werkstückes 6 zum zugehörigen Werkzeugmagazin zurückgefahren und dort ein neues Werkzeug eingewechselt werden. Die beiden Bearbeitungseinheiten können somit entweder gleichzeitig am Werkstück 6 oder am Werkstück 9 arbeiten. So kann das Werkzeug 21 des Schlittens 18 in der beschriebenen Weise die in Vorschubrichtung 32 linke Längsseite des Werkstückes 9 bearbeiten, während mit dem Werkzeug des Schlittens 18' beispielsweise in die Oberseite des Werkstückes 9 eine Profilierung oder eine Nut eingebracht werden kann.

Bei einer anderen Verfahrensweise ist es möglich, dass mit der einen Bearbeitungseinheit das auf den Spanntraversen 5 eingespannte Werkstück 6 und mit dem anderen Werkzeug das Werkstück 9 zeitgleich bearbeitet wird. Die Werkstücke 6, 9 werden jeweils auf ihrer Führung 8, 4 komplett bearbeitet. Eine Übergabe der Werkstücke 6, 9 von der einen auf die andere Transportbahn erfolgt nicht.

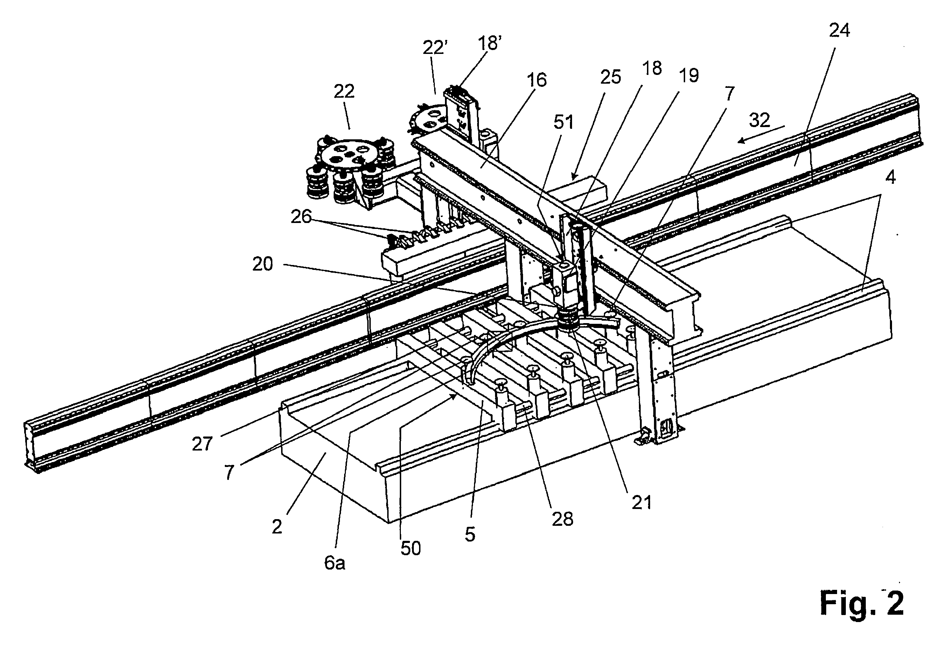

Fig. 2 zeigt eine Maschine, bei der auf den Spanntraversen 5 ein bogenförmiges Werkstück 6a eingespannt ist. Die entsprechenden Spannelemente 7 sind längs der Spanntraversen 5 so verschoben, dass das Werkstück 6a über seine Länge zuverlässig eingespannt werden kann. Im dargestellten Ausführungsbeispiel ist der Schlitten 18 längs des Trägers 16 in Y-Richtung und die Bearbeitungseinheit 51 in Z-Richtung längs des Schlittens 18 so weit nach unten verfahren, dass mit dem Werkzeug 21 das bogenförmige Werkstück 6a längs seiner einen gekrümmten Längsseite bearbeitet werden kann.

Die Maschine hat den horizontalen Bettteil 2. Anstelle des vertikalen Bettteils 3 mit der Werkstückauflage 8 und der Vorschubeinheit 10 ist eine Führung 24 vorgesehen, längs der ein Klemmtisch 25 in X-Richtung (Vorschubrichtung 32) verfahren werden kann. Der Klemmtisch 25 hat obere Klemmbacken 26 und untere (nicht dargestellte) Klemmbacken, zwischen denen das zu bearbeitende Werkstück 9 eingespannt wird. Mit dem Werkzeug der Bearbeitungseinheit des Schlittens 18' kann das Werkstück 9 im Durchlaufverfahren bearbeitet werden. Gleichzeitig kann mit dem Werkzeug 21 das bogenförmige Werkstück 6a bearbeitet werden. Die Steuerung der Maschine ist so gestaltet, dass sie die erforderlichen Bewegungen in den drei Richtungen X, Y, Z für die beiden Bearbeitungseinheiten und die Vorschubeinheiten unabhängig voneinander steuern kann.

Im Übrigen ist die Maschine nach Fig. 2 gleich ausgebildet wie die Maschine gemäß Fig. 1.

Das bogenförmige Werkstück 6a kann nach der Bearbeitung der einen Längsseite umgespannt werden, so dass nunmehr die andere Längsseite mit dem Werkzeug 21 bearbeitet werden kann. In dieser umgespannten Lage wird das Werkstück 6a mit den in Fig. 2 noch in Ruhestellung befindlichen Spannelementen 7 auf den Spanntraversen 5 eingespannt. Der Umspannvorgang kann manuell oder automatisch erfolgen. Die nicht benötigten Spannelemente 7 können weggefahren (wie in Fig. 2 dargestellt), abgesenkt oder weggeschwenkt werden, so dass das Werkzeug 21 freien Zugang zur Bearbeitung des Werkstückes 6a hat.

Wie bei der vorigen Ausführungsform sind die Spanntraversen 5 Teil der Spanneinheit 50, die zur Verstellung der Spanntraversen 5 in X-Richtung an einander gegenüberliegenden Längsseiten in X-Richtung sich erstreckende Führungen 27, 28 für die Spanntraversen 5 aufweist. Dadurch ist es möglich, den Abstand zwischen den Spanntraversen 5 an die Länge der einzuspannenden Werkstücke 6, 6a anzupassen. In dem eingestellten Abstand werden die Spanntraversen 5 zueinander festgehalten, so dass die gesamte Spanneinheit 50 während der Bearbeitung der Werkstücke 6, 6a längs der X-Führung 4 verfahren wird.

Bei einer anderen (nicht dargestellten) Ausführungsform können die Spanntraversen 5 jeweils einen eigenen Antrieb haben. Sie können dadurch frei positioniert werden. Bei der Bearbeitung des eingespannten Werkstückes werden die Spanntraversen dann als Einheit verfahren, wobei sie ihren eingestellten Abstand voneinander einhalten.

Auch bei der Maschine nach Fig. 2 können die Werkzeuge der beiden Bearbeitungseinheiten 51, 51' gleichzeitig am gleichen Werkstück oder unabhängig voneinander an unterschiedlichen Werkstücken arbeiten. Weiter ist es entsprechend der vorigen Ausführungsform möglich, dass während der Bearbeitung eines Werkstückes mit einem Werkzeug der jeweils andere Schlitten zum zugehörigen Werkzeugmagazin 22, 22' gefahren wird, um dort einen Werkzeugwechsel vorzunehmen.

Der Klemmtisch 25 kann so ausgebildet sein, dass er aus einzelnen Spannwagen besteht, die jeweils eine obere und eine untere Klemmbacke aufweisen. Die Spannwagen können in X-Richtung unabhängig voneinander und somit relativ zueinander positionierbar sein, so dass auf einfache Weise unterschiedlich lange Werkstücke 9 eingespannt werden können. Alle Spannwagen werden zur Bearbeitung des Werkstückes 9 im eingestellten Abstand zueinander als Einheit in Vorschubrichtung 32 verfahren.

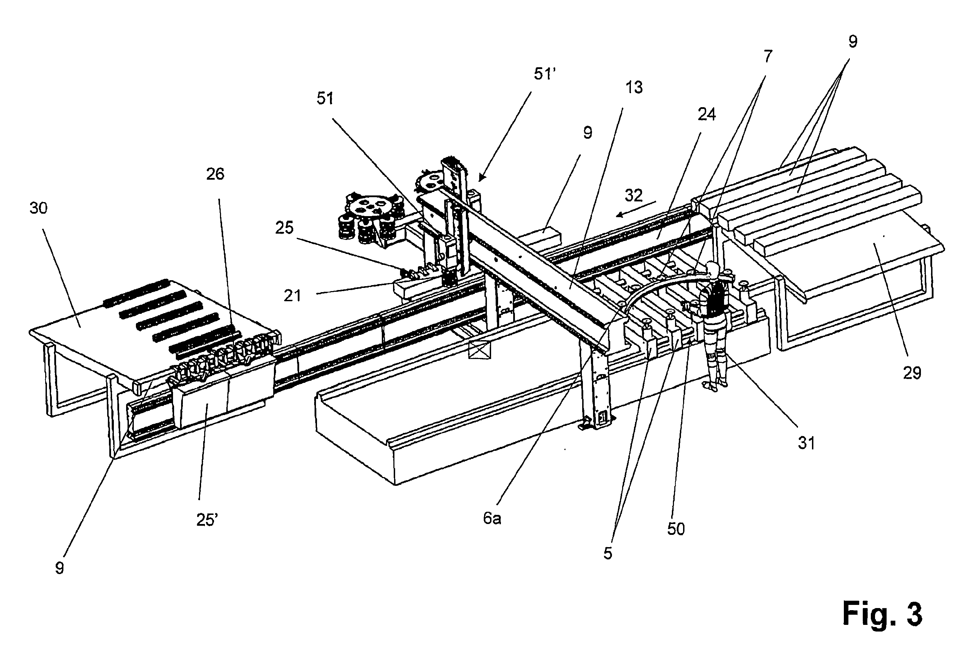

Fig. 3 zeigt eine Maschine innerhalb einer Anlage. Die zu bearbeitenden länglichen Werkstücke 9 werden über einen Querförderer 29 in Richtung auf die Führung 24 transportiert. Zur Aufnahme der länglichen Werkstücke 9 hat die Maschine zwei Klemmtische 25, 25', die längs der Führung 24 verfahrbar sind. Die Führung 24 ist so ausgebildet, dass die beiden Klemmtische 25, 25' auf beiden Seiten der Führung 24 verfahren werden können. Fig. 3 zeigt die Situation, dass sich der Klemmtisch 25 im Bereich der Bearbeitungseinheiten 51, 51' befindet. Das eingespannte längliche Werkstück 9 wird bearbeitet. Das Werkstück 9 kann an seiner in Vorschubrichtung 32 linken Längsseite mit dem Werkzeug 21 im Durchlaufverfahren bearbeitet werden. Es ist weiter möglich, das Werkstück 9 an der einen oder auch an beiden Stirnseiten zu bearbeiten. Schließlich können beispielsweise mit der Bearbeitungseinheit 51' Bohrungen in das Werkstück 9 eingebracht werden.

Der andere, auf der anderen Seite der Führung 24 geführte Klemmtisch 25' befindet sich an einem Übergabetisch 30, mit dem die bearbeiteten Werkstücke 9 quer zur Führung 24 abtransportiert werden. Der Klemmtisch 25' wird vor den Übergabetisch 30 gefahren. Dann werden seine Klemmbacken 26 gelöst und damit das bearbeitete Werkstück 9 freigegeben, das in bekannter Weise automatisch dem Übergabetisch 30 übergeben wird. Mit ihm werden die bearbeiteten Werkstücke 9 quer zu ihrer Längsrichtung weitertransportiert.

Sobald der Klemmtisch 25' das komplett bearbeitete Werkstück 9 dem Übergabetisch 30 übergeben hat, fährt er längs der Führung 24 zurück bis auf Höhe des Klemmtisches 25. Mit den oberen und unteren Klemmbacken des Klemmtisches 25' wird das Werkstück 9 an seiner in Vorschubrichtung 32 linken Längsseite eingespannt. Anschließend geben die Klemmbacken des Klemmtisches 25 das Werkstück frei, so dass der Klemmtisch 25 zurück zum Querförderer 29 fahren kann. Da die Klemmbacken 26 des Klemmtisches 25' das Werkstück 9 an der bereits bearbeiteten Seite einspannen, kann mit den Bearbeitungseinheiten 51, 51' die nunmehr freiliegende, in Vorschubrichtung 32 rechte Längsseite des Werkstückes 9 bearbeitet werden. Je nachdem, welche Stirnseiten bei der Einspannung im Klemmtisch 25 bearbeitet worden sind, kann nunmehr die jeweils noch nicht bearbeitete Stirnseite bearbeitet werden. Ist das Werkstück 9 bei seiner Einspannung im Klemmtisch 25 bereits an beiden Stirnseiten bearbeitet worden, erübrigt sich bei der Einspannung im Klemmtisch 25' die stirnseitige Bearbeitung des Werkstückes. Dann ist nur noch die in Vorschubrichtung 32 rechte Längsseite des Werkstückes 9 zu bearbeiten. Anschließend fährt der Klemmtisch 25' längs der Führung 24 zum Übergabetisch 30 und gibt das komplett bearbeitete Werkstück 9 ab.

In der Zwischenzeit hat der Klemmtisch 25 vom Querförderer 29 das nächste Werkstück 9 aufgenommen und an dessen in Vorschubrichtung 32 rechter Längsseite eingespannt. Der Klemmtisch 25 fährt zurück zu den Bearbeitungseinheiten 51, 51', mit denen dieses nächste Werkstück in der erforderlichen Weise bearbeitet wird. Der Klemmtisch 25' fährt, nachdem er das Werkstück 9 dem Übergabetisch 30 übergeben hat, zum Klemmtisch 25 zurück und übernimmt in der beschriebenen Weise das teilweise bearbeitete Werkstück 9. Auf die beschriebene Weise werden die vom Querförderer 29 zugeführten Werkstücke 9 nacheinander im Durchlaufverfahren in der Maschine bearbeitet.

Auch bei den zuvor beschriebenen Ausführungsbeispielen gemäß den Fig. 1 und 2 können am länglichen Werkstück 9 mit den Bearbeitungseinheiten 51, 51' beide Längsseiten des Werkstückes 9 und beide Stirnseiten bearbeitet werden. Hierfür ist ein Umspannvorgang notwendig, der je nach Ausbildung der Anlage automatisch oder manuell erfolgen kann. Außerdem können in die Oberseite des Werkstückes 9 mit den Bearbeitungseinheiten 51, 51' Bohrungen eingebracht werden.

Bei einer anderen (nicht dargestellten) Ausführungsform können die Bearbeitungseinheiten 51, 51' auch um eine in X-Richtung liegende Achse schwenkbar am jeweiligen Schlitten 18, 18' gelagert sein. Die Schwenkachse ist in diesem Falle vorzugsweise eine gesteuerte Achse. Dadurch ist es beispielsweise möglich, in die freiliegende Schmalseite des Werkstückes 9 Bohrungen einzubringen. Auch können die Bearbeitungseinheiten 51, 51' um die C-Achse (gesteuerte Bewegung um die Z-Achse) schwenkbar sein, z.B. für den Einsatz von Winkel-Bohrköpfen.

Während der Bearbeitung der Werkstücke 9 kann eine Bedienungsperson 31 auf den Spanntraversen 5 mit den Spannelementen 7 das bogenförmige Werkstück 6a aufspannen. Die Spanneinheit 50 wird so verfahren, dass sie sich im Bereich zwischen dem Portal 13 und dem Querförderer 29 befindet. Die Werkstücke 6a können auch auf der anderen Seite des Portals 13 auf der Spanneinheit 50 aufgespannt werden. Sobald das bogenförmige Werkstück 6a aufgespannt ist, wird es in den Bereich des Portals 13 gefahren, damit es, wie anhand von Fig. 2 erläutert worden ist, mit dem Werkzeug 21 der einen Bearbeitungseinheit 51, 51' bearbeitet werden kann.

Anstelle des bogenförmigen Werkstückes 6a kann die Bedienungsperson 31 auch das plattenförmige Werkstück 6 gemäß Fig. 1 auf der Spanneinheit einspannen.

Die Werkstücke, die auf der Spanneinheit 50 aufgespannt werden, können abweichend von den Ausführungsbeispielen auch jede andere Formgestaltung haben. Da die Bearbeitungseinheiten 51, 51' der beiden Schlitten 18, 18' in den beiden Richtungen Y, Z und die Werkstücke in Richtung X verfahren werden können, können unterschiedlichst gestaltete Werkstücke problemlos im gewünschten Maße bearbeitet werden.

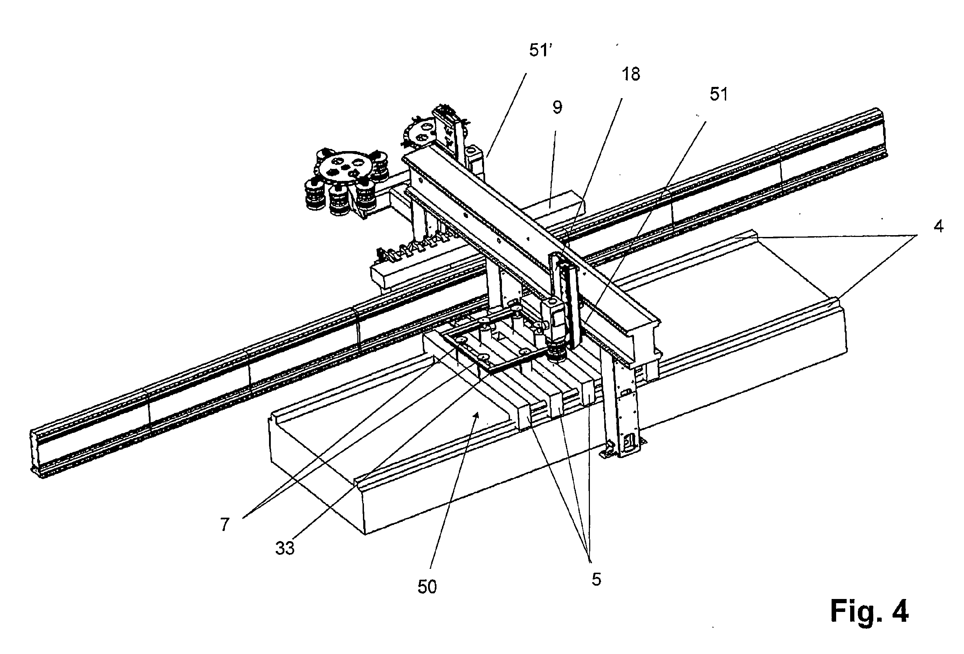

Fig. 4 zeigt eine Maschine, die der Ausführungsform gemäß Fig. 2 entspricht. Auf den Spanntraversen 5 der Spanneinheit 50 ist mit den Spannelementen 7 ein Rahmen 33 eingespannt, der beispielsweise aus den komplett bearbeiteten länglichen Werkstücken 9 zusammengesetzt worden ist. Der Rahmen 33 ist beispielsweise ein Fensterrahmen, der in bekannter Weise an seiner Außenseite durch einen sogenannten Umfräsvorgang bearbeitet wird. Für den Umfräsvorgang wird zumindest eine der beiden Bearbeitungseinheiten 51, 51' herangezogen. Im Ausführungsbeispiel wird die Außenseite des Rahmens 33 durch ein Werkzeug der Bearbeitungseinheit 51 bearbeitet. Mit dem Schlitten 18 wird die Bearbeitungseinheit 51 in Y-Richtung verfahren, um die in Y-Richtung liegenden Rahmenseiten zu bearbeiten. Zur Bearbeitung der in X-Richtung liegenden Rahmenseiten wird die Spanneinheit 50 in X-Richtung längs der Führungen 4 verfahren.

Die Spannelemente 7 spannen den Rahmen 33 an dessen Innenseite, so dass die Rahmenaußenseite für die Fräsbearbeitung freiliegt.

Der Rahmen 33 kann, sofern kein längliches Werkstück neu zu bearbeiten ist, gleichzeitig mit den Bearbeitungseinheiten 51 und 51' bearbeitet werden.

Mit den beschriebenen vorteilhaften Ausführungsformen von Maschinen lassen sich Standardteile hochproduktiv bearbeiten. Während die Werkstücke 9 im Durchlaufverfahren bearbeitet werden können, können auf der Spanneinheit 50 andere Werkstücke, die beispielsweise einer flächigen Aufspannung bedürfen, aufgespannt werden, so dass diese anschließend an die oder simultan zur Bearbeitung der Werkstücke 9 bearbeitet werden können.. Die Maschine kombiniert eine Durchlaufmaschine für längliche, stabförmige Werkstücke mit einem Flächentisch, auf dem Werkstücke 6, 6a aufgerüstet werden können, die eine große Spannfläche vor allem in Breitenrichtung, d. h. quer zu deren Längserstreckung, benötigen. Auch Sonderteile, wie gekrümmte oder bogenförmige Werkstücke, die eine individuell anpassbare Aufspannung erfordern, können mit der Spanneinheit 50 aufgespannt und mit den beispielhaft beschriebenen Maschinen hochproduktiv bearbeitet werden.

Unter Berücksichtung der gewünschten Bearbeitungen an den Werkstücken 6, 6a, 9, 33 und den dazu notwendigen Werkzeugwechseln wird eine optimale Bearbeitungsabfolge festgelegt. Diese wird vom Bediener der Maschinensteuerung vorgegeben oder vorteilhaft direkt von dieser berechnet.

Ist die Rüstung auf dem Flächentisch abgeschlossen, wird je nach festgelegter oder berechneter Bearbeitungsabfolge die Bearbeitung der länglichen Werkstücke 9 unterbrochen und mit den entsprechenden Werkzeugen am Flächentisch gearbeitet. Auch ist es möglich, dass mit der einen Bearbeitungseinheit das Werkstück 9 und mit der anderen Bearbeitungseinheit, wenn sie nicht zur Bearbeitung des Werkstückes 9 benötigt wird, das auf der Spanneinheit 50 befindliche Werkstück 6, 6a, 33 bearbeitet wird. Auf diese Weise ist eine rüstzeitneutrale Fertigung möglich.

Mit der Maschine kann das komplette Fertigungsspektrum eines Fensterbauers abgedeckt werden. Zusätzliche Maschinen für die Sonderteile können eingespart werden. Die Spindeln 20 der beiden Bearbeitungseinheiten 51, 51' können für die Standardwerkstücke 9 und für die Sonderwerkstücke 6, 6a, 33 auf das gleiche Werkzeugmagazin 22, 22' zurückgreifen. Für die Bearbeitung der Standardwerkstücke 9 und der Sonderwerkstücke 6, 6a, 33 ist nur eine einzige Maschinensteuerung notwendig. Dies hat den Vorteil, dass der Bediener 31 der Maschine nur eine Software zur Programmierung der Steuerung beherrschen muss.

Die beispielhaft beschriebenen flächigen, gebogenen oder rahmenförmigen Werkstücke 6, 6a. 33 können zum Beispiel für Rundbogenfenster, verleimte Fensterrahmen, Türblätter, Möbelfüllungen und dergleichen eingesetzt werden.

In den Ausführungsbeispielen haben die Maschinen nur ein Portal 13. Es ist selbstverständlich möglich, dass die Maschinen wenigstens ein weiteres Portal aufweisen, längs dem wenigstens eine, vorzugsweise zwei Bearbeitungseinheiten 51, 51' in Y-Richtung verfahrbar sind. Der Einsatz von wenigstens zwei Portalen 13 erhöht die Variabilität bei der Werkstückbearbeitung und insbesondere die Leistung.

## Patentansprüche

1. Maschine zum Bearbeiten von Werkstücken aus Holz, Kunststoff und dergleichen, mit wenigstens einer ersten Transportbahn, längs der erste, längliche oder stabförmige Werkstücke transportierbar sind, die mit wenigstens einer Bearbeitungseinheit vorzugsweise komplett bearbeitet werden,
**dadurch gekennzeichnet, dass** die Maschine wenigstens eine zweite Transportbahn (4) aufweist, längs der wenigstens eine Spanneinheit (50) verfahrbar ist, mit der zweite Werkstücke (6, 6a, 33) spannbar sind, die auf der zweiten Transportbahn (4) bearbeitet werden, und dass beide Transportbahnen (8, 24; 4) von wenigstens einer quer zu ihnen sich erstreckenden Führung (13) überspannt sind, längs der die Bearbeitungseinheit (51, 51') zur wahlweisen Bearbeitung der ersten und der zweiten Werkstücke (9; 6, 6a, 33) verfahrbar ist.

2. Maschine nach Anspruch 1,
**dadurch gekennzeichnet, dass** die Bearbeitungseinheit (51, 51') an einem Schlitten (18, 18') gelagert ist, der längs der Führung (13) verfahrbar ist.

3. Maschine nach Anspruch 2,
**dadurch gekennzeichnet, dass** die Bearbeitungseinheit (51, 51') quer zur Führung (13) und zu den Transportbahnen (8, 24; 4) längs des Schlittens (18, 18') verfahrbar ist.

4. Maschine nach einem der Ansprüche 1 bis 3,
**dadurch gekennzeichnet, dass** längs der Führung (13) zwei Schlitten (18, 18') unabhängig voneinander verfahrbar sind, die jeweils eine Bearbeitungseinheit (51, 51') tragen.

5. Maschine nach einem der Ansprüche 1 bis 4,
**dadurch gekennzeichnet, dass** die Spanneinheit (50) unabhängig voneinander verstellbare Spanntraversen (5) aufweist, die mit jeweils wenigstens einem Spannelement (7) versehen sind.

6. Maschine nach Anspruch 5,
**dadurch gekennzeichnet, dass** das Spannelement (7) längs der Spanntraverse (5) verstellbar ist.

7. Maschine nach einem der Ansprüche 1 bis 6,
**dadurch gekennzeichnet, dass** die beiden Transportbahnen (8, 24; 4) auf unterschiedlicher Höhe liegen.

8. Maschine nach einem der Ansprüche 1 bis 7,
**dadurch gekennzeichnet, dass** der Bearbeitungseinheit (51, 51') wenigstens ein Werkzeugmagazin (22, 22') zugeordnet ist.

9. Maschine nach einem der Ansprüche 4 bis 8,
**dadurch gekennzeichnet, dass** jeder Bearbeitungseinheit (51, 51') jeweils wenigstens ein Werkzeugmagazin (22, 22') zugeordnet ist.

10. Maschine nach einem der Ansprüche 1 bis 9,
**dadurch gekennzeichnet, dass** längs der ersten Transportbahn (24) wenigstens ein Klemmtisch (25, 25') verfahrbar ist, der das erste Werkstück (9) aufnimmt.

11. Verfahren zum Bearbeiten von Werkstücken aus Holz, Kunststoff und dergleichen, bei dem erste Werkstücke auf einer ersten Transportbahn transportiert werden und mit wenigstens einer Bearbeitungseinheit vorzugsweise komplett bearbeitet werden,
**dadurch gekennzeichnet, dass** zweite Werkstücke (6, 6a, 33) mit wenigstens einer Spanneinheit (50) gespannt sind, welche längs wenigstens einer zweiten Transportbahn (4) verfahrbar ist und zeitlich nacheinander mit der einen Bearbeitungseinheit (51, 51') oder zeitgleich zur Bearbeitung der ersten Werkstücke (9) mit wenigstens einer zweiten Bearbeitungseinheit (51, 51') bearbeitet werden.

12. Verfahren nach Anspruch 11,
**dadurch gekennzeichnet, dass** die beiden Bearbeitungseinheiten (51, 51') unabhängig voneinander zur Bearbeitung der ersten und der zweiten Werkstücke (9; 6, 6a, 33) verfahren werden.

13. Verfahren nach Anspruch 11 oder 12,
**dadurch gekennzeichnet, dass** während der Bearbeitung des ersten Werkstückes (9) das zweite Werkstück (6, 6a, 33) aufgespannt wird.

14. Verfahren nach einem der Ansprüche 11 bis 13,
**dadurch gekennzeichnet, dass** die zweiten Werkstücke (6, 6a, 33) komplett bearbeitet werden.
